# EUROPÄISCHE PATENTANMELDUNG

(11) **EP 4 201 974 A1**
(43) Veröffentlichungstag der Anmeldung: **28.06.2023**
(21) Anmeldenummer: 21217323.1
(22) Anmeldetag: 23.12.2021
(51) Int. Cl.: C08G 18/02, C08G 18/28

(54) **POLYMERE CARBODIIMIDE, VERFAHREN ZU DEREN HERSTELLUNG UND DEREN VERWENDUNG**

(71) Anmelder: LANXESS Deutschland GmbH, 50569 Köln (DE)
(72) Erfinder: LAUFER, Wilhelm, 67158 Ellerstadt (DE)

(57) **Zusammenfassung**

Die Erfindung betrifft neue Polycarbodiimide, welche einfach und sicher herzustellen sind, hohe mittlere Molmassen aufweisen und einen exzellenten Hydrolyseschutz bewirken, sowie Verfahren zu deren Herstellung und deren Verwendung.

## Beschreibung

Carbodiimide haben sich in vielen Anwendungen bewährt, z.B. als Hydrolyseschutzmittel für Thermoplaste, Polyole, Polyurethane, Triglyceride und Schmierstofföle.

Bevorzugt werden hierfür stark sterisch gehinderte Polycarbodiimide eingesetzt. Speziell für die Stabilisierung von Polyamiden, Polyethylen- oder Polybutylenterephthalaten sowie Copoylestern wie TPE-E, Thermoplastische Polyurethan Elastomere (TPU), walzbare Polyurethan-Elastomere sowie lösemittel-basierte Polyurethan-Dispersionen für Beschichtungen und Lacke haben sich vor allem stark sterische aromatische Polycarbodiimide mit langen Polymerketten (hohe Molmassen) bewährt. Diese stark sterisch gehinderten und langkettigen Polycarbodiimide, wie z.B. solche auf Basis Triisopropylphenylisocyanat, haben jedoch den Nachteil nur mit einem beträchtlichen apparativen und zeitlichen Aufwand großtechnisch hergestellt werden zu können. Polycarbodiimide welche ausschließlich auf Diisocyanaten basieren haben sehr hohe Viskositäten und können auch nach dem Carbodiimidisierungsschritt weiter unkontrollierbar polymerisieren, was diverse Nachteile mit sich bringt, wie z.B. einen sehr hohen Aufwand bei der Pastillierung. Alternative Herstellungsverfahren in Lösemittel (Kristallisation) beinhalten mehrere Prozessstufen, sind somit kostspielig und führen zu Produkten in Pulverform, weshalb zur Vermeidung von Stäuben in den Endanwendungen das so gewonnenen Pulver anschließend zusätzlich kompaktiert werden muss. Verfahren hierzu sind u. a. bereits in EP176572 oder EP2933285 beschrieben.

Endverschlossene (gecapte) aromatische Polycarbodiimide sind zwar weniger schwierig in der Herstellung, zeigen jedoch im Vergleich nicht die gewünschte hohe Stabilisierung und müssen aufgrund von giftigen Nebenprodukten gekennzeichnet werden.

Es bestand daher ein Bedarf an neuen Polycarbodiimiden, welche die genannten Nachteile des Stands der Technik nicht aufweisen, d.h. einfach und sicher herzustellen sind, hohe mittlere Molmassen aufweisen, möglichst kennzeichnungsfrei sind und einen exzellenten Hydrolyseschutz bewirken. Somit war es die Aufgabe der vorliegenden Erfindung entsprechende Polycarbodiimide bzw. ein Verfahren zu deren Herstellung bereitzustellen.

Überraschenderweise wurde nun gefunden, dass die vorgenannte Aufgabe erfüllt wird durch Polycarbodiimide der Formel (I) 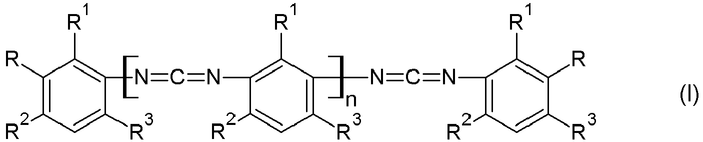 in der
die Reste R gleich oder verschieden sein können und ausgewählt sind aus NCN-R^{I}, wobei die Reste R^{I} C₁-C₂₂-Alkyl, unsubstiuiertes oder C₁-C₁₂-alkyl-substituiertes C₆-C₁₂-Cycloalkyl, unsubstiuiertes oder C₁-C₁₂-alkyl-substituiertes C₆-C₁₈-Aryl oder unsubstiuiertes oder C₁-C₁₂-alkyl-substituiertes C₆-C₁₈-Aralkyl bedeuten und
R¹, R² und R³ jeweils gleich oder unabhängig voneinander für Methyl, Ethyl, i-Propyl- oder n-Propyl, n-Butyl oder i-Butyl oder t-Butyl stehen und
n von 20 bis 500 , bevorzugt von 30 bis 100, besonders bevorzugt 30 bis 50 ist,
wobei die gemittelte Molmasse Mw mehr als 10000 beträgt und der Anteil von Polycarbodiimiden mit einer Molmasse von 30000 g/mol oder mehr kleiner als 20 Gew.-% ist.

Da die Kettenlänge der Poycarbodiimide typischerweise einer Verteilungsfunktion folgt, ist die obige Definition der Wiederholungseinheiten n nicht so zu interpretieren, dass die Polycarbodiimide frei sind von Verbindungen, mit einem Wert n, der kleiner oder größer ist als der angegebenen Bereich. Der Anteil solcher Verbindungen liegt aber in Anbetracht der angegebenen mittleren Molmasse und des Anteils von Polycarbodiimiden mit einer Molmasse von 30000 g/mol oder mehr typischerweise in einem vernachlässigbar geringen Bereich.

In einer bevorzugten Ausführungsform steht R^{I} für C₁-C₁₂-alkyl-substituierte C₆-C₁₂-Aryle, vorzugsweise für C₁-C₄-alkyl-substituierte C₆-C₁₂-Aryle, besonders bevorzugt für ein- bis dreifach C₁-C₄-alkyl-substituierte C₆-Aryle, und ganz besonders bevorzugt Di- und/oder Triisopropylphenyl.

Bevorzugt sind Polycarbodiimide gemäß Formel (I), wobei R¹, R² und R³ für i-Propyl- und R^{I} für Diisopropylphenyl und/oder Triisopropylphenyl stehen. Besonders bevorzugt ist dabei die Ausführungsform, bei der die Reste R^{I} in einem Molekül gleich sind.

Bevorzugt sind weiterhin Polycarbodiimide der Formel (I) die mittlere Molmassen von 10000 g/mol bis 20000 g/mol bevorzugt 12000 g/mol bis 18000 g/mol, besonders bevorzugt 14000 g/mol bis 16000 g/mol aufweisen. Die mittleren Molmassen (Mw) werden mittels Gel-Permeation-Chromatographie (GPC) bestimmt, vorzugsweise mit der in den Ausführungsbeispielen beschriebenen Methode.

Bevorzugt beträgt der Anteil an Polycarbodiimiden mit einer Molmasse von 30000 g/mol oder mehr weniger als 15 Gew.-%, besonders bevorzugt weniger als 12 Gew.-%. Der Anteil an Carbodiimiden mit einer Molmassen (M) von 30000 g/mol wird ebenfalls mittels Gel-Permeation-Chromatographie (GPC) bestimmt.

Bevorzugt liegt das Massenverhältnis der Reste R zum Rest der Verbindung der Formel (I) im Bereich von 1:100 bis 1:20.

Der Carbodiimid-Gehalt (NCN-Gehalt, gemessen durch Titration mit Oxalsäure) der erfindungsgemäßen Carbodiimide liegt üblicherweise bei 14 - 17 Gew.%, bevorzugt 14 - 16 Gew.%, besonders bevorzugt 14 - 15 Gew.%. Zur Bestimmung des NCN-Gehaltes werden die NCN-Gruppen mit im Überschuss zugegebener Oxalsäure reagiert und dann die nicht reagierte Oxalsäure mit Natriummethylat potentiometrisch rücktitriert, wobei der Blindwert des Systems berücksichtigt wird.

Die erfindungsgemäßen Polycarbodiimide eignen sich hervorragend für die Stabilisierung von esterbasierten Polymeren, vorzugsweise Polymeren ausgewählt aus Polyethylenterephthalat (PET), Polybutylenterephthalat (PBT), Polytrimethylenterephthalat (PTT), Copolyestern wie modifizierte Polyestern aus Cyclohexandiol und Terephthalsäure (PCTA), thermoplastische Polyester-Elastomeren (TPE E), Ethylenvinylacetat (EVA), Polymilchsäure (PLA) und/oder PLA-Derivate, Polybutylenadipat-Terephthalate (PBAT), Polybutylensuccinate (PBS), Polyhydroxyalkanoate (PHA) sowie Blends, wie vorzugsweise PA/PET- oder PHA/PLA-Blends, Polyurethan-Elastomere, vorzugsweise thermoplastische Polyurethan-Elastomere (TPU), oder walzbares Polyurethan, PU-Lacke und - Beschichtungen, bevorzugt Lösemittel-basierte Dispersionen.

Die Erfindung betrifft auch ein Verfahren zur Stabilisierung der obigen esterbasierten Polymere durch Einbringung der erfindungsgemäßen Polycarbodiimide in die Polymere. Bevorzugt werden die vorgenannten Carbodiimide zu den esterbasierten Polymeren dabei mittels Feststoffdosieraggregaten zugegeben.

Feststoffdosieraggregate im Sinne der Erfindung sind vorzugsweise: Ein-, Zwei- und Mehrwellenextruder, kontinuierlich arbeitenden Co-Kneter (Typ Buss) und diskontinuierlich arbeitenden Kneter, z.B. vom Typ Banbury.

Die erfindungsgemäßen Polycarbodiimide sind erhältlich durch ein Verfahren zur Herstellung von Polycarbodiimiden der Formel (I) 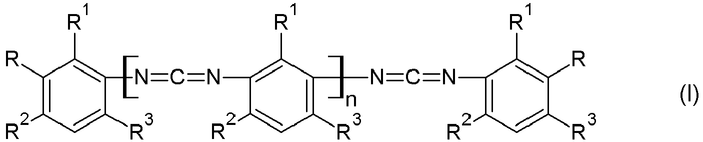 durch Carbodiimidisierung von aromatischen Diisocyanaten der Formel (II) 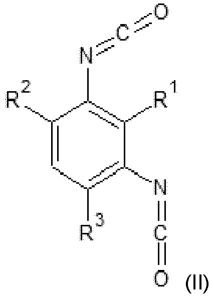
und Monoisocyanaten der Formel R^{I}-NCO, wobei die Reste R, R¹, R², R³ und R^{I} und n die oben angegebenen Bedeutungen haben,
unter Abspaltung von Kohlendioxid bei Temperaturen von 80 °C bis 200 °C in Gegenwart von Katalysatoren und gegebenenfalls Lösungsmittel,
dadurch gekennzeichnet, dass die Diisocyanate und Monoisocyanate in einem einem Massenverhältnis von 20:1 bis 100:1, bevorzugt von 25:1 bis 50:1 und besonders bevorzugt von 30:1 bis 40:1 eingesetzt werden.

Die Synthese der Polycarbodiimide der Formel (I) erfolgt nach dem Stand der Technik durch basische oder heterocyclische Katalyse. Üblicherweise werden als Katalysatoren Alkali- oder Erdalkaliverbindungen, sowie heterocyclische Verbindungen, die Phosphor enthalten verwendet. Entsprechende Katalysatoren sind beispielsweise in Angew. Chem. 1962, 74, 801-806 und Angew. Chem. 1981, 93, 855-866 beschrieben.

Als Isocyanate werden besonders bevorzugt 1,3,5-Triisopropylphenyldiisocyanat (TRIDI), 2,6 Diisopropylphenylisocyanat (DIPI) oder 2,4,6 Triisopropylphenylisocyanat (TRIPI) verwendet.

Als Katalysatoren für die Carbodiimidisierung der Isocyanate zu Carbodiimiden der Formel (I) sind in einer Ausführungsform der Erfindung starke Basen oder Phosphorverbindungen bevorzugt. Vorzugsweise werden Phospholenoxide, Phospholidine oder Phospholinoxide sowie die entsprechenden Sulfide verwendet. Ferner können als Katalysatoren tertiäre Amine, basisch reagierende Metallverbindungen, Alkali-, Erdalkalioxide oder -Hydroxide, -Alkoholate oder -Phenolate, Carbonsäuremetallsalze und nicht basische Organometallverbindungen verwendet werden. Als Katalysator sind besonders Alkylphospholenoxide wie z. B. Methlyphospholenoxid bevorzugt.

Die Reaktion (Carbodiimidisierung) wird vorzugsweise in einem Temperaturbereich von 140°C bis 200°C, besonders bevorzugt von 160°C bis 180°C durchgeführt.

In einer bevorzugten Ausführungsform der Erfindung werden die Isocyanate (Diisocyanate und Monoisocyanate) zuerst zusammen gemischt und dann als Mischung carbodiimidisiert.

In einer weiteren Ausführungsform werden zuerst die Diisocyanate der Formel (II) in Gegenwart von Katalysatoren und gegebenenfalls Lösungsmittel teilweise carbodiimidisiert und anschließend die Monoisocyanate der Formel R^{I}-NCO zur Reaktionsmischung zugegeben, um die Carbodiimidisierung zu vervollständigen.

In einer bevorzugten Ausführungsform wird nach der Carbodiimidisierung die Reaktionsmischung bei erhöhter Temperatur, bevorzugt bei Reaktionstemperatur unter reduziertem Druck gerührt, und der Restgehalt an Isocyanaten auf < 0,1 Gew.% reduziert.

In einer bevorzugten Variante der Erfindung wird die Endreaktionsmasse auf Pastillieranlagen z. B. der Fa. Sandvik Holding GmbH oder über eine Schuppenwalze z. B. der Firma GMF Gouda zu Pastillen oder Schuppen konfektioniert.

Ein weiterer Gegenstand der Erfindung sind Zusammensetzungen enthaltend die erfindungsgemäßen polymeren Carbodiimide und esterbasierte Polymere, vorzugsweise Polymere ausgewählt aus Polyethylenterephthalat (PET), Polybutylenterephthalat (PBT), Polytrimethylenterephthalat (PTT), Copolyestern wie modifizierte Polyestern aus Cyclohexandiol und Terephthalsäure (PCTA), thermoplastische Polyester-Elastomeren (TPE E), Ethylenvinylacetat (EVA), Polymilchsäure (PLA) und/oder PLA-Derivate, Polybutylenadipat-Terephthalate (PBAT), Polybutylensuccinate (PBS), Polyhydroxyalkanoate (PHA) sowie Blends, wie vorzugsweise PA/PET- oder PHA/PLA-Blends, Polyurethan-Elastomere, vorzugsweise thermoplastische Polyurethan-Elastomere (TPU), oder walzbares Polyurethan, PU-Lacke und -Beschichtungen, bevorzugt Lösemittel-basierte Dispersionen. Das Gewichtsverhältnis von polymeren Carbodiimiden zu esterbasierten Polymeren beträgt typischerweise von 0,1:100 bis 5:100 vorzugsweise von 0,5:100 bis 4:100 und meist bevorzugt von 1:100 bis 3:100.

Die nachfolgenden Beispiele dienen der Erläuterung der Erfindung, ohne dabei limitierend zu wirken.

### Beispiele:

### Bestimmung der Molmasse:

| | | |
|---|---|---|
| Apparat | Instrument Ultimate 3000 Detektor RI ERC-7515A Kombination aus 3 Säulen (PSS SDV 5µ 100A, PSS SDV 5µ 500A und PSS SDV 5µ 10000A, Material PL-Gel 10e4 A, Länge 300 mm, Durchschnitt 8 mm) PSS WInGPC-Unichrom Software Volumetrische Flasche 25 mL Pipetman 100 µL (± 0.0001 g) | |
| Reagenzien | Standard Proben Polystyrol-Standards (Polydispersitätsindex kleiner 1,2) | |
| Lösemittel | 2,6-Di-*tert*-Butyl-1,4-Methylphenol (BHT) Tetrahydrofuran (THF) Toluol | |
| Parameter | V (Einspritzmengen) Fluß Eluent Druck Temperatur | 100 µL 1.0 mL/min THF 36 bar 40 °C |

### Carbodiimidisierung

Reines 1,3,5-Triisopropylphenyldiisocyanat (TRIDI) für CDI 1 oder eine Mischung aus 1,3,5-Triisopropylphenyldiisocyanat (TRIDI) und 2,6 Diisopropylphenylisocyanat (DIPI) in für CDI 2, 4, 5 und 6 oder eine Mischung aus 1,3,5-Triisopropylphenyldiisocyanat (TRIDI) und Cyclohexanol wurde in Anwesenheit von ca. 0,1 % Methylphospholenoxid bei 160 °C carbodiimidisiert, bis ein NCO-Gehalt von < 1 % erreicht war.

Die Ergebnisse sind in Tabelle 1 nachstehend aufgeführt.

Getestet wurden:
1) **CDI 1:** Polycarbodiimid mit einem NCN-Gehalt von ca. 14 Gew.% der Formel (I) mit R¹, R², R³ = Isopropyl und R = NCO hergestellt aus 1,3,5-Triisopropylphenyldiisocyanat (Vergleichsbeispiel)
2) **CDI 2:** Polycarbodiimid mit einem NCN-Gehalt von ca. 13,5 Gew.% der Formel (I) mit R¹, R², R³ = Isopropyl und R = NCN-R^{I} mit R^{I}= 2,6-Diisopropylphenyl hergestellt aus ca. 80 Gew.% 1,3,5-Triisopropylphenyldiisocyanat und 20 Gew.% 2,6-Diisopropylphenylisocyanat, (Vergleichsbeispiel).
3) **CDI 3:** Polycarbodiimid mit einem NCN-Gehalt von ca. 12,5 Gew.% der Formel (I) mit R¹, R², R³ = Isopropyl und R = Oxocyclohexyl hergestellt aus ca. 80 Gew.% 1,3,5-Triisopropylphenyldiisocyanat und 20 Gew.% Cyclohexanol (Vergleichsbeispiel).
4) **CDI 4:** Polycarbodiimid mit einem NCN-Gehalt von ca. 14 Gew.% der Formel (I) mit R¹, R², R³ = Isopropyl und R = NCN-R^{I} mit R^{I}= 2,6-Diisopropylphenyl hergestellt aus ca. 92,5 Gew.% 1,3,5-Triisopropylphenyldiisocyanat und 7,5 Gew.% 2,6-Diisopropylphenylisocyanat (Vergleichsbeispiel).
5) **CDI 5:** Polycarbodiimid mit einem NCN-Gehalt von ca. 14,5 Gew.% der Formel (I) mit R¹, R², R³ = Isopropyl und R = Oxocyclohexyl hergestellt aus ca. 97 Gew.% 1,3,5-Triisopropylphenyldiisocyanat und 3 Gew.% Cyclohexanol (Vergleichsbeispiel).
6) **CDI 6:** Polycarbodiimid mit einem NCN-Gehalt von ca. 14 Gew.% der Formel (I) mit R¹, R², R³ = Isopropyl und R = NCN-R^{I} mit R^{I}= 2,6-Diisopropylphenyl hergestellt aus ca. 97 Gew.% 1,3,5-Triisopropylphenyldiisocyanat und 3 Gew.% 2,6-Diisopropylphenylisocyanat (erfindungsgemäß).

**Tabelle 1:**

| Bsp. | Carbodiimid | Stabilität bei 180 °C, 4h Polym eri sationszustand Löslichkeit in Toluol | Pastillierbarkeit / Pastillenform | Mw in g/mol | Anteil monomeres Carbodiimid |
|---|---|---|---|---|---|
| 1 | CDI 1 (Vgl.) | polymerisiert/teilweise löslich | schwierig, Bildung von Fäden / unregelmässige Form uind Größe | ca. 17000 | < 0,1 Gew.% |
| 2 | CDI 2 (Vgl.) | keine weitere polymerisation/löslich | sehr gut, gleiche Form und Größe | ca. 3000 | ca. 1,8 - 2 Gew.% |
| 3 | CDI 3 (Vgl.) | polymerisiert/nicht löslich | sehr schwierig, keine Pastillenform möglich | ca. 9000 | - |
| 4 | CDI 4 (Erf.) | keine weitere polymerisation/löslich | sehr gut, gleiche Form und Größe | ca. 8000 | ca. 0,35 Gew.% |
| 5 | CDI 5 (Vgl.) | polymerisiert/nicht löslich | nicht möglich | ca. 12000 | |
| 6 | CDI 6 (Erf.) | keine weitere polymerisation/löslich | gut, gleiche Form und Größe | ca. 15000 | < 0,1 Gew .% |

| | | | | | |
|---|---|---|---|---|---|
| Vgl.: Vergleichsbeispiel, Erf.: Erfindungsgemäß | | | | | |

Wie aus Tabelle 1 ersichtlich, kann nur das erfindungsgemäße Polycarbodiimid im Vergleich leicht und sicher hergestellt und konfektioniert werden (keine Gefahr einer Durchpolymerisation im Reaktor oder in den Leitungen zum und im Konfektionierbereich wie Schuppenwalze oder Pastillierband) und zeigt gleichzeitig die gewünschte Molmasse (Mw > 10000 g/mol) sowie einen reduzierten Anteil vom giftigen monomeren Carbodiimid unter der relevanten Grenze von 0,1 Gew.%. Weiterhin wird das Emissionsverhalten mit längeren Polymerketten und geringem Anteil an monomeren Carbodiimid reduziert.

### Hydrolyseschutz in Polyethylenterephthalat (PBT)

Zur Bewertung der Hydrolyseschutzwirkung in PBT wurden je 2,5 Gew.% der untersuchten Carbodiimide mittels eines Labordoppelschneckenextruders ZSK 25 der Firma Werner & Pfleiderer vor der unten beschriebenen Messung in PET eindispergiert. Aus den gewonnenen Granulaten wurden dann die für die Messung der Reißfestigkeit verwendeten F3-Normprüfkörper an einer Spritzgießmaschine des Typs Arburg Allrounder 320 S 150 - 500 hergestellt.

Für den Hydrolysetest wurden diese F3-Normprüfkörper in Wasser bei einer Temperatur von 120°C gelagert und deren Reißfestigkeit in MPa gemessen. Aufgetragen sind in Tabelle 2 die relativen Reißfestigkeiten = (Reißfestigkeit nach x Tagen Lagerung / Reißfestigkeit nach 0 Tagen) x 100. Als untere Grenze für relative Reißfestigkeit gilt meist ein Wert von 70 - 75 %.

**Die Ergebnisse sind in Tabelle 2 aufgelistet:**

| Hydrolysedauer (Tage) | Relative Reißfestigkeit | | | | | |
|---|---|---|---|---|---|---|
| | Bsp. 7: ohne CDI (vgl.) | Bsp. 8: CDI 1 (vgl.) | Bsp. 9: CDI 2 (vgl.) | Bsp. 10: CDI 3 (vgl.) | Bsp. 11: CDI 4 (vgl.) | Bsp. 12: CDI 6 (erf.) |
| 0 | 100% | 100% | 100% | 100% | 100% | 100% |
| 1 | 100% | 100% | 100% | 100% | 100% | 100% |
| 2 | 51% | 100% | 100% | 100% | 100% | 100% |
| 3 | - | 100% | 100% | 100% | 100% | 100% |
| 4 | - | 100% | 100% | 100% | 100% | 100% |
| 5 | - | 100% | 48% | 40% | 100% | 100% |
| 6 | - | 100% | - | - | 100% | 100% |
| 7 | - | 100% | - | - | 75% | 100% |
| 8 | - | 100% | - | - | - | 100% |
| 9 | - | 69% | - | - | - | 81% |
| 10 | - | - | - | - | - | - |

| | | | | | | |
|---|---|---|---|---|---|---|
| vgl. = Vergleichsbeispiel, erf. = erfindungsgemäß | | | | | | |

### Dispergierbarkeit und Verträglichkeit in Polyurethan-basierten Formulierungen und im walzbarem Polyurethan

**Tabelle 3 zeigt die Ergebnisse der Verträglichkeitsprüfungen in DMF/Polyurethan-Dispersionen und in walzbarem Polyurethan-Elastomer (Urepan^{®} der LANXESS Deutschland GmbH)**

| Bsp. | Polycarbodiimid | Anteil M > 30000 g/mol | Dispergierbarkeit / Löslichkeit | |
|---|---|---|---|---|
| | | | walzbares Polyurethan | DMF/PU-Dispersion |
| 13 | CDI 1 (Vgl.) | 22 wt% | sehr schlecht, Bildung von Stippen | keine homogene und stabile Dispersion |
| 14 | CDI 6 (Erf.) | 10 wt% | homogen, keine Stippen | homogene und stabile Dispersion |

| | | | | |
|---|---|---|---|---|
| vgl. = Vergleichsbeispiel, erf. = erfindungsgemäß | | | | |

Wie aus Tabelle 3 ersichtlich, führt das erfindungsgemäße Polycarbodiimid - im Vergleich zum Polycarbodiimid aus der Stand der Technik - zu stabilen und homogenen Polyurethan-Formulierungen aufgrund besserer Dispergierbarkeit und Löslichkeit. Zudem ist zu erkennen, dass ein niedriger Anteil an höhermolekularen Polymerketten mit mehr als 30000 g/mol im erfindungsgemäßen Polycarbodiimid die Verträglichkeit in vielen Anwendungen und Formulierungen entscheidend verbessert.

## Patentansprüche

1. Polycarbodiimide der Formel (I) 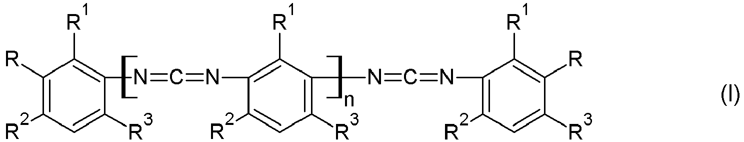 in der
die Reste R gleich oder verschieden sein können und ausgewählt sind aus NCN-R^{I}, wobei die Reste R^{I} C₁-C₂₂-Alkyl, unsubstiuiertes oder C₁-C₁₂-alkyl-substituiertes C₆-C₁₂-Cycloalkyl, unsubstiuiertes oder C₁-C₁₂-alkyl-substituiertes C₆-C₁₈-Aryl oder unsubstiuiertes oder C₁-C₁₂-alkyl-substituiertes C₆-C₁₈-Aralkyl bedeuten und
R¹, R² und R³ jeweils gleich oder unabhängig voneinander für Methyl, Ethyl, i-Propyl-oder n-Propyl, n-Butyl oder i-Butyl oder t-Butyl stehen und
n von 20 bis 500 , bevorzugt von 30 bis 100, besonders bevorzugt von 30 bis 50 ist,
wobei die gemittelte Molmasse Mw mehr als 10000 beträgt und der Anteil von Polycarbodiimiden mit Molmassen von 30000 g/mol oder mehr kleiner als 20 Gew.-% beträgt.

2. Polycarbodiimide gemäß Anspruch 1, wobei die mittlere Molmassen von 10000 g/mol bis 20000 g/mol bevorzugt 12000 g/mol bis 18000 g/mol, besonders bevorzugt 14000 g/mol bis 16000 g/mol beträgt.

3. Polycarbodiimide nach einem oder mehreren der Ansprüche 1 und 2, wobei der Anteil an Polycarbodiimiden mit einer Molmasse von 30000 g/mol oder mehr weniger als 15 Gew.-%, bevorzugt weniger als 12 Gew.-% beträgt.

4. Polycarbodiimide nach einem oder mehreren der Ansprüche 1 bis 3, wobei R^{I} für C₁-C₁₂-alkyl-substituierte C₆-C₁₂-Aryle, vorzugsweise für C₁-C₄-alkyl-substituierte C₆-C₁₂-Aryle, besonders bevorzugt für ein- bis dreifach C₁-C₄-alkyl-substituierte C₆-Aryle, und ganz besonders bevorzugt für Di- und/oder Triisopropylphenyl steht,

5. Polycarbodiimide nach einem oder mehreren der Ansprüche 1 bis 4, wobei R¹, R² und R³ für i-Propyl- und R^{I} für Diisopropylphenyl und/oder Triisopropylphenyl stehen.

6. Polycarbodiimide nach einem oder mehreren der Ansprüche 1 bis 5, wobei das Massenverhältnis der Reste R zum Rest der Verbindung der Formel (I) im Bereich von 1:100 bis 1:20 beträgt.

7. Polycarbodiimide nach einem oder mehreren der Ansprüche 1 bis 6, wobei der Carbodiimid-Gehalt 14 - 17 Gew.%, bevorzugt 14 -16 Gew.%, besonders bevorzugt 14 - 15 Gew.% beträgt.

8. Verfahren zur Herstellung von Polycarbodiimiden der Formel (I) 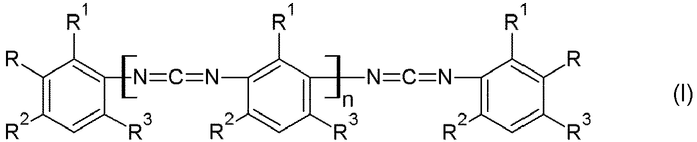 durch Umsetzung von
Diisocyanaten der Formel (II) 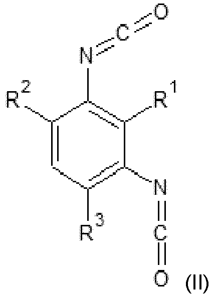
und Monoisocyanaten der Formel R^{I}-NCO,
wobei die Reste R gleich oder verschieden sein können und ausgewählt sind aus NCN-R^{I}, wobei die Reste R^{I} C₁-C₂₂-Alkyl, unsubstiuiertes oder C₁-C₁₂-alkyl-substituiertes C₆-C₁₂-Cycloalkyl, unsubstiuiertes oder C₁-C₁₂-alkyl-substituiertes C₆-C₁₈-Aryl oder unsubstiuiertes oder C₁-C₁₂-alkyl-substituiertes C₆-C₁₈-Aralkyl bedeuten und
R¹, R² und R³ jeweils gleich oder unabhängig voneinander für Methyl, Ethyl, i-Propyl-oder n-Propyl, n-Butyl oder i-Butyl oder t-Butyl stehen und
n von 20 bis 500 , bevorzugt von 30 bis 100, besonders bevorzugt von 30 bis 50 ist, unter Abspaltung von Kohlendioxid bei Temperaturen von 80 °C bis 200 °C in Gegenwart von Katalysatoren und gegebenenfalls Lösungsmittel,
wobei das Massenverhältnis von Diisocyanaten zu Monoisocyanaten von 20:1 bis 100:1, bevorzugt von 25:1 bis 50:1 und ganz besonders bevorzugt von 30:1 bis 40:1 beträgt.

9. Verfahren gemäß Anspruch 8, wobei die Diisocyanate der Formel (II) zuerst mit den Monoisocyanaten der Formel R^{I}-NCO gemischt und dann als Mischung auf die Reaktionstemperatur erwämt und zur Umsetzung gebracht werden.

10. Verfahren gemäß Anspruch 8, wobei zuerst die Diisocyanate der Formel (II) in Gegenwart von Katalysatoren und gegebenenfalls Lösungsmittel teilweise carbodiimidisiert und anschließend die Monoisocyanate der Formel RI-NCO zur Reaktionsmischung zugegeben werden, um die Carbodiimidisierung zu vervollständigen.

11. Verfahren gemäß einem oder meheren der Ansprüche 8 bis 10, wobei nach der Umsetzung bei erhöhter Temperatur, bevorzugt bei 160 - 180 °C unter reduziertem Druck gerührt, und der Restgehalt an Isocyanate auf < 0,1 Gew.% reduziert wird.

12. Verfahren gemäß einem oder meheren der Ansprüche 8 bis 11, wobei die bei der Umsetzung erhaltenen Polycarbodiimide auf einem Kühlband pastilliert oder auf einer Schuppenwalze zu Schuppen konfektioniert werden.

13. Verfahren gemäß einem oder meheren der Ansprüche 8 bis 12, wobei die Umsetzung bei einer Temperatur von 160°C bis 180°C erfolgt.

14. Verwendung von Polycarbodiimiden nach einem oder mehreren der Ansprüche 1 bis 7 von esterbasierten Polymeren, vorzugsweise Polymeren ausgewählt aus Polyethylenterephthalat (PET), Polybutylenterephthalat (PBT), Polytrimethylenterephthalat (PTT), Copolyestern wie modifizierte Polyestern aus Cyclohexandiol und Terephthalsäure (PCTA), thermoplastische Polyester-Elastomeren (TPE E), Ethylenvinylacetat (EVA), Polymilchsäure (PLA) und/oder PLA-Derivate, Polybutylenadipat-Terephthalate (PBAT), Polybutylensuccinate (PBS), Polyhydroxyalkanoate (PHA) sowie Blends, wie vorzugsweise PA/PET- oder PHA/PLA-Blends, Polyurethan-Elastomere, vorzugsweise thermoplastische Polyurethan-Elastomere (TPU), oder walzbares Polyurethan, PU-Lacke und -Beschichtungen, bevorzugt Lösemittel-basierte Dispersionen.

15. Zusammensetzungen enthaltend:
esterbasierte Polymere, vorzugsweise Polymere ausgewählt aus Polyethylenterephthalat (PET), Polybutylenterephthalat (PBT), Polytrimethylenterephthalat (PTT), Copolyestern wie modifizierte Polyestern aus Cyclohexandiol und Terephthalsäure (PCTA), thermoplastische Polyester-Elastomeren (TPE E), Ethylenvinylacetat (EVA), Polymilchsäure (PLA) und/oder PLA-Derivate, Polybutylenadipat-Terephthalate (PBAT), Polybutylensuccinate (PBS), Polyhydroxyalkanoate (PHA) sowie Blends, wie vorzugsweise PA/PET- oder PHA/PLA-Blends, Polyurethan-Elastomere, vorzugsweise thermoplastische Polyurethan-Elastomere (TPU), oder walzbares Polyurethan, PU-Lacke und -Beschichtungen, bevorzugt Lösemittel-basierte Dispersionen und Polycarbodiimide nach einem oder mehreren der Ansprüche 1 bis 7.
